# EUROPÄISCHE PATENTSCHRIFT

(11) **EP 1 095 556 B1**
(45) Veröffentlichungstag und Bekanntmachung des Hinweises auf die Patenterteilung: **30.07.2003**
(21) Anmeldenummer: 00122933.5
(22) Anmeldetag: 21.10.2000
(51) Int. Cl.: A01D 78/10

(54) **Heuwerbungsmaschine, insbesondere Kreiselschwader**
Haymaking machinery, in particular rotary windrower
Machine de fenaison, en particulier andaineuse rotative

(30) Priorität: 29.10.1999 DE 29919104 U
(43) Veröffentlichungstag der Anmeldung: 02.05.2001
(73) Patentinhaber: NIEMEYER Landmaschinen GmbH, D-48477 Hörstel-Riesenbeck (DE)
(72) Erfinder: Kamphus, Ludger, 48496 Hopsten (DE)

(56) Entgegenhaltungen:
- EP-A- 0 316 896
- DE-U- 9 310 525
- FR-A- 2 726 965
- FR-A- 2 751 165

## Beschreibung

Die Erfindung betrifft eine Heuwerbungsmaschine, insbesondere einen Kreiselschwader gemäß dem Oberbegriff nach Anspruch 1.

Aus der EP 0 316 896 B1 ist eine Heuwerbungsmaschine als Kreiselschwader nach dem gattungsbildenden Oberbegriff des Anspruchs 1 bekannt.

In der EP 0 316 896 B1 ist eine Heuwerbungsmaschine beschrieben, insbesondere ein gezogener Kreiselschwader mit mindestens zwei Kreiselrechen, die mittels Ausleger an einem Fahrgestell über horizontale Klappachsen angelenkt sind, wobei das Nachlaufverhalten in Kurvenfahrten gegenüber dem Zugfahrzeug durch eine Fahrwerksteuerung beeinflusst wird.

Teil des Fahrgestells ist eine starre Zugdeichsel, welche mit einem Anschlussteil um eine Hochgelenkverbindung schwenkbar verbunden ist, wobei ein Teil der Gewichtskraft des Fahrgestells gegenüber dem Boden über gesteuerte Laufräder abgestützt wird und ein weiterer Teil der Gewichtskraft sich gegenüber dem Boden am Anhängepunkt des Zugfahrzeugs und damit an diesem abstützt.

Die Laufräder des Fahrgestells sind an diesem um eine vom jeweiligen Achszapfen des Laufrades definierte Hochachse schwenkbar abgestützt, wobei beide Laufräder gemeinsam mittels einer Lenkvorrichtung, ausschließlich in Abhängigkeit von Ausrichtungsänderungen zwischen der Zugdeichsel und dem Anschlussteil, welches mit dem Zugfahrzeug gekoppelt ist, gesteuert werden. Die Lenkvorrichtung beinhaltet dabei eine Zug- und Schubstange als Betätigungsglied, die ihrerseits mittels eines am Fahrgestell gelagerten Winkelhebels mit der Spurstange zur Betätigung der Lenkhebel der Laufräder zur Herbeiführung der Lenkbewegungen derart gekoppelt ist, dass den Laufrädern durch die Spurstangenkopplung die Lenkbewegungen des Zugfahrzeugs aufgezwungen werden.

Insbesondere bei Kurvenfahrten mit geringen Kurvenradien befriedigt diese Lösung nicht, da die Laufräder bei geringen Kurvenradien wegen nicht hinreichend angepasster Lenkwinkel der gelenkten Laufräder zu Axialschlupf (Radieren) neigen.

Aufgabe der Erfindung ist es, die Lenkeigenschaften der Fahrwerksteuerung eines Kreiselschwaders, insbesondere beim Durchfahren von Kurven mit geringen Kurvenradien, mit einfachen Mitteln zu verbessern.

Gelöst wird die Aufgabe der Erfindung mit den Merkmalen im kennzeichnenden Teil des Anspruchs 1. Weitere vorteilhafte Ausgestaltungen der Erfindung sind der nachfolgenden Beschreibung und den Ansprüchen 2 bis 9 zu entnehmen.

Es zeigen:
- Fig.1 -: Einen Kreiselschwader nach der Erfindung in einer Ansicht von oben auf die Arbeitsebene in Geradeausfahrt.
- Fig.2 -: Den hinteren Teil des Fahrgestells mit den Laufrädern und einem Teil der Lenkvorrichtung gemäß Fig.1 in vergrößerter Darstellung.
- Fig.3 -: Ansicht X des Laufradträgers gemäß Fig.2.
- Fig.4 -: Einen Kreiselschwader nach der Erfindung in einer Ansicht von oben auf die Arbeitsebene in einer Kurvenfahrt.
- Fig.5 -: Den hinteren Teil des Fahrgestells mit den Laufrädern, und einem Teil der Lenkvorrichtung gemäß Fig.4 in vergrößerter Darstellung.
- Fig. 6 -: Lenkstock 18 gemäß Fig. 5 in vergrößerter Darstellung.

### Bezugszeichenliste

- 1 -: Kreiselschwader
- 2 -: Zugfahrzeug
- 3,3': Kreiselrechen
- 4 -: Fahrgestell
- 5 -: Anschlussteil
- 6 -: Zugdeichsel
- 7 -: Maschinenquerträger
- 8 -: Mittelebene
- 9,9': - Ausleger
- 10,10' -: Klappachse
- 11 -: Laufradträger
- 12,12' -: Laufrad
- 13,13' -: Achszapfen
- 14,14'-: Hochachse
- 15 -: Lenkvorrichtung
- 16 -: Zug- u. Druckstange
- 17 -: Winkelhebel
- 18 -: Lenkstock
- 19,19' -: Spurstange
- 20,20' -: Lenkhebel
- 21,21' -: Abrollkreis
- 22 -: Hochgelenk
- 23 -: Lenkstocklager
- 24,24' -: Gelenkpunkt
- 25,25' -: Gelenkpunkt
- 26,26' -: Gelenkpunkt
- 27 -: Gelenkpunktabstand
- 28 -: Gelenkpunkt
- 29,29' -: Überdeckungsbereich
- 30,30' -: Vertikalebene
- 31,31' -: Kugelgelenk
- 32,32' -: Kugelgelenk
- 33,33': - Endbereiche
- 34 -: Fahrbahnebene
- 35 -: Lenkstockradius
- 36,36': - Querverschiebung
- 37, 37' -: Ausgangspunkte
- 38 -: Kreisbogen
- 39 -: Verschiebeweg

- α,α': -Anstellwinkel
- β -: Winkel
- γ -: Schwenkwinkel
- δ,δ' -: Lenkwinkel

- F -: Fahrtrichtung
- P -: Pol

- Rₐ -: Kurvenaußenradius
- Rᵢ -: Kurveninnenradius

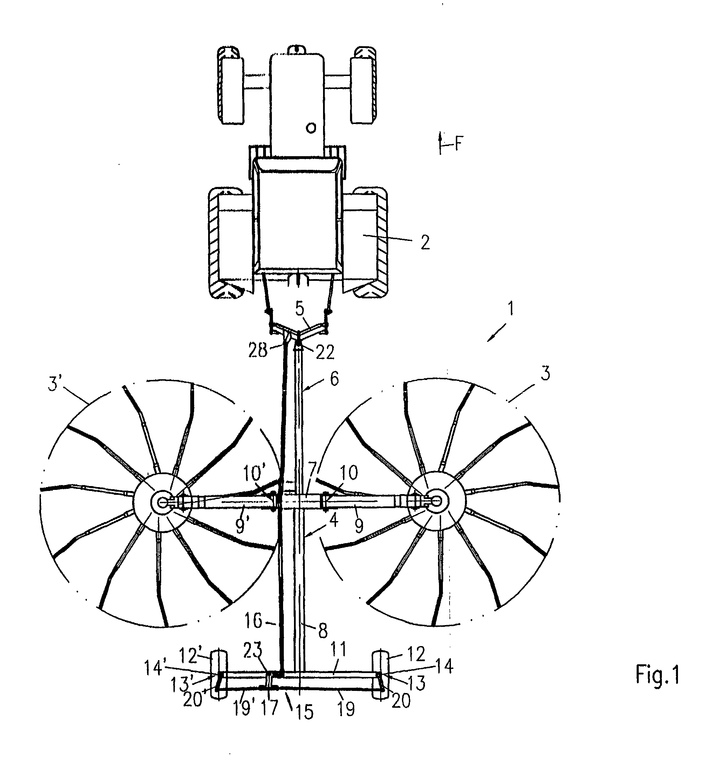

In **Fig.1** ist ein Kreiselschwader 1 nach der Erfindung in einer Ansicht mit Blickrichtung auf die Arbeitsebene in Geradeausfahrt in Fahrtrichtung F dargestellt. Der Kreiselschwader 1 wird von einem Zugfahrzeug 2 gezogen und angetrieben. Im wesentlichen besteht der Kreiselschwader 1 aus einem Fahrgestell 4, den Kreiselrechen 3,3', dem Anschlussteil 5, der Zugdeichsel 6, dem Maschinenquerträger 7, an dem die Ausleger 9,9' gelenkig um die Klappachsen 10,10' angeschlagen sind und dem Laufradträger 11, an dem die Laufräder 12,12' an vertikal ausgerichteten Achszapfen 13,13' geführt um die ihnen zugeordnete Hochachse 14,14' symmetrisch zur Mittelebene 8 schwenkbar gelagert sind. Die Zugdeichsel 6 ist durch ein Hochgelenk 22 mit dem Anschlussteil 5 schwenkbar verbunden.

Die vertikalen Achszapfen 13,13' sind an ihrem oberen Ende mit Lenkhebeln 20,20' drehfest verbunden, wobei die Lenkhebel 20,20', schwenkbar um ihre jeweilige Hochachse 14,14', untereinander gelenkig mit den ihnen zugeordneten Spurstangen 19,19' und einem Winkelhebel 17 verbunden sind. Der Winkelhebel 17 stützt sich in seinem Lenkstocklager 23 gegenüber dem Laufradträger 11 ab, wobei der Winkelhebel 17 gelenkig mit der Zug- und Druckstange 16 und dem Anschlussteil 5 im Gelenkpunkt 28 verbunden ist.

Somit umfasst die Lenkvorrichtung 15 zur Steuerung der Laufräder 12,12' im wesentlichen die Bauelemente Lenkhebel 20,20', Spurstangen 19,19', Winkelhebel 17 und Zug- und Druckstange 16, wobei diese Bauelemente in Wirkverbindung mit dem Anschlussteil 5 stehen.

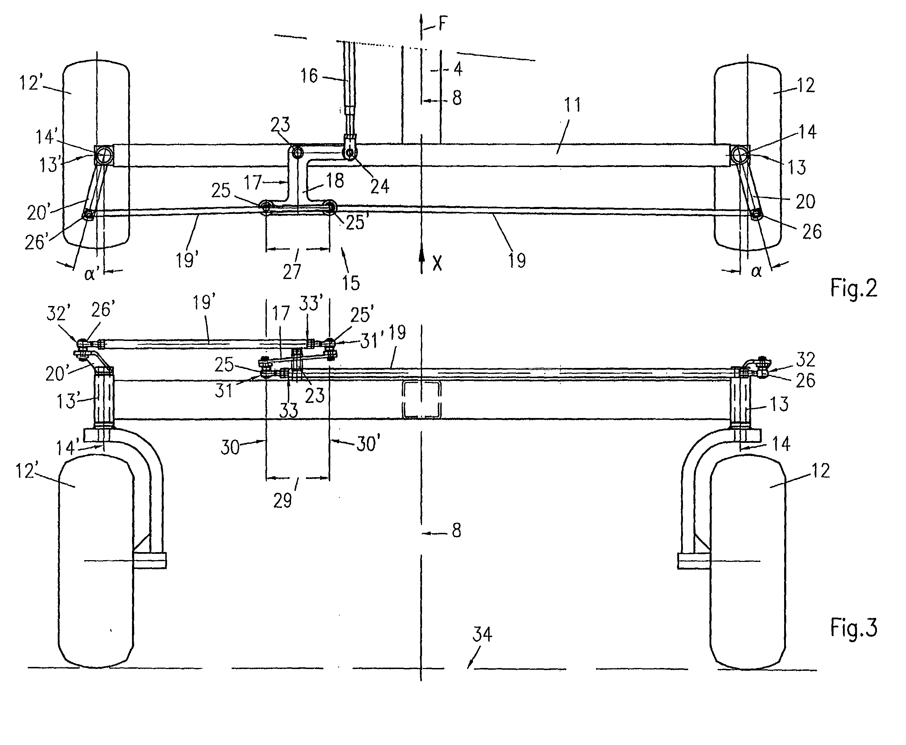

**Fig.2** zeigt den hinteren Teil des Fahrgestells 4 mit den Laufrädern 12,12' und einem Teil der Lenkvorrichtung 15 gemäß Fig.1 in vergrößerter Darstellung. Der Winkelhebel 17 ist gleichzeitig ausgebildet als Lenkstock 18, an dem in den Gelenkpunkten 25,25' die Spurstangen 19,19' angeschlagen sind. Gleichzeitig ist der Winkelhebel 17 im Gelenkpunkt 24 an die Zug- und Druckstange 16 angeschlagen, so dass der Lenkstock 18 zur Betätigung der Spurstangen 19,19' in dem Lenkstocklager 23, welches sich am Laufradträger 11 abstützt, schwenkbeweglich gelagert ist. Die Spurstangen 19,19' sind an ihren äußeren Enden in den Gelenkpunkten 26,26' an den jeweiligen Lenkhebeln 20,20' angeschlagen. Die Gelenkpunkte 25,25' besitzen einen Gelenkpunktabstand 27 zueinander. Die Lenkhebel 20,20' schließen gegenüber der Mittelebene 8 einen Anstellwinkel α bzw. α' ein, wobei die Laufräder 12,12' bei diesem Anstellwinkel α,α' jedoch in Geradeausfahrt (Grundstellung) ausgerichtet sind.

**Fig.3** zeigt die Ansicht X gemäß Fig.2. In dieser Ansicht sind die Gelenkpunkte 25,25',26,26' als Kugelgelenkverbindungen 31,31',32,32' dargestellt.

Dieser Darstellung ist zu entnehmen, dass die Spurstangen 19,19' an die Gelenkpunkte 25,25' derart angeschlossen sind, dass die Endbereiche 33,33' der einander zugewandten Enden der Spurstangen 19,19' sich teilweise räumlich übereinanderliegend im wesentlichen quer zur Fahrtrichtung F ausgerichtet überdecken.

Per Definition ist dabei der Überdeckungsbereich 29 im vorgenannten Sinne in der Grundstellung der Laufräder 12,12' (Geradeausfahrt) gekennzeichnet durch seine horizontale Ausdehnung parallel zur Fahrbahnebene 34 und durch den Abstand zweier parallel zueinander verlaufenden Vertikalebenen 30,30', die ihrerseits parallel zur Fahrtrichtung F und damit auch parallel zur Mittelebene 8 verlaufen, und wobei die Vertikalebenen 30,30' die ihnen zugeordneten Gelenkpunkte 25,25' schneiden.

Die Kugelgelenke 31,31',32,32' können beispielsweise Gewindeenden umfassen, welche mit den Spurstangen 19,19', die ihrerseits endseitig mit Einschraubgewindebohrungen ausgestattet sind, verschraubt werden. Dadurch können die Abstände zwischen den Gelenkpunkten 25,26 bzw. 25',26', insbesondere dann, wenn die Gewindeenden der paarweise einander zugeordneten Kugelgelenke 31,32 bzw. 31',32' mit Links- und Rechtsgewinde einander zugeordnet sind, feinjustierbar abgestimmt werden.

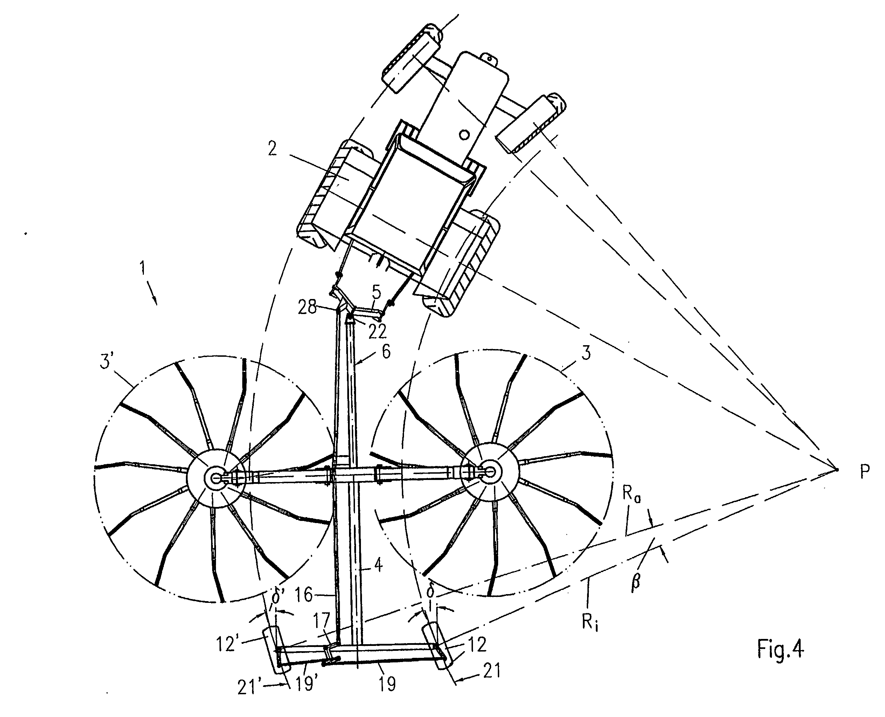

In **Fig. 4** ist ein Kreiselschwader 1 nach der Erfindung in einer Ansicht von oben mit Blickrichtung auf die Arbeitsebene in einer Draufsicht in einer Kurvenfahrt dargestellt. Die Verlängerungen aller Radachsen, die des Zugfahrzeugs 2 und die der Laufräder 12,12' des Fahrgestells 4 schneiden sich im Idealfall im Pol P. Dabei schließen die Verlängerungen der Radachsen der Laufräder 12,12', welche gleichzeitig die Radien Rₐ und Rᵢ darstellen, den Winkel β ein. Dabei läuft das Laufrad 12 mit dem Radius Rᵢ auf dem inneren Abrollkreis 21 und das Laufrad 12' auf dem äußeren Abrollkreis 21'.

Da beide Laufräder 12,12' auf unterschiedlichen Kurvenradien Rᵢ, Rₐ abrollen, benötigen sie unterschiedliche Lenkeinschläge, so dass die Lenkwinkel δ bzw. δ' unterschiedliche Werte einnehmen müssen, damit keines der Laufräder 12,12' gegenüber dem Boden Axialschlupf ausgesetzt ist.

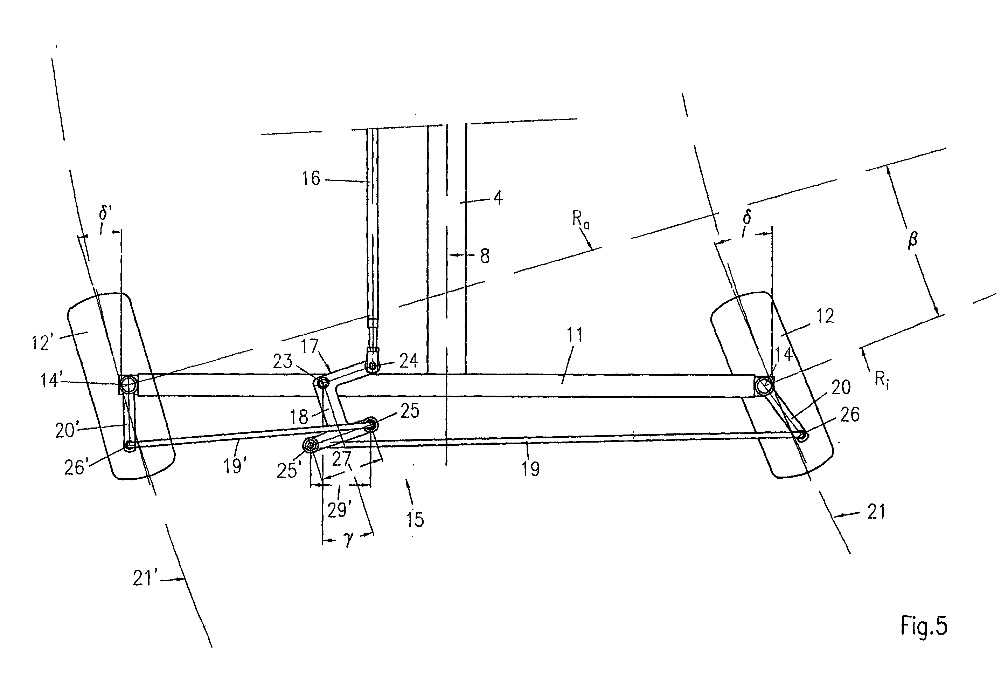

**Fig.5** zeigt den hinteren Teil des Fahrgestells mit den Laufrädem 12,12', und einem Teil der Lenkvorrichtung gemäß Fig.4 in vergrößerter Darstellung. Durch die gelenkige Anbindung der Zug- und Druckstange 16 an den Winkelhebel 17 erfährt dieser infolge einer Verschiebung der Zug- und Druckstange 16 durch die Ausrichtungsänderung zwischen Zugfahrzeug 2 und Kreiselschwader 1 eine Verschwenkung mit dem Schwenkwinkel γ um die Drehachse des Lenkstocklagers 23, wodurch der Lenkstock 18 als Teil des Winkelhebels 17 infolge der gelenkigen Anbindung der Spurstangen 19,19' in den Gelenkpunkten 25,25' auf die Spurstangen 19,19' eine Verschiebebewegung ausübt. Durch die Kopplung der Spurstangen 19,19' mit den Lenkhebeln 20,20' in den Gelenkpunkten 26,26' erzeugen diese die Lenkeinschläge der Laufräder 12,12'. Die Lenkeinschläge der Laufräder 12,12' sind gekennzeichnet durch ihre Lenkwinkel δ,δ'. Durch eine Verschwenkung des Winkelhebels 17 verringert sich die Breite des Überdeckungsbereiches 29 gegenüber der Grundstellung des Winkelhebels 17, wobei sich nunmehr die momentane Breite des Überdeckungsbereiches 29' einstellt, so dass die momentane Breite des Überdeckungsbereiches 29' in Abhängigkeit des Schwenkwinkels γ eine veränderliche Größe darstellt.

Die Lenkwinkel δ,δ' stellen sich infolge der Lenkerkopplung der Lenkvorrichtung 15, bestehend aus dem Anschlussteil 5, der Zug- u. Druckstange 16, dem Lenkstock 18 als Teil des Winkelhebels 17, den Spurstangen 19,19' und den Lenkhebeln 20,20' in Kurvenfahrten zwangsläufig ein. Die sich in Folge der Ausrichtungsänderung des Zugfahrzeugs 2 gegenüber dem Kreiselschwader 1 einstellenden Lenkwinkel δ,δ' sind abhängig von den Hebelübersetzungsverhältnissen innerhalb der Lenkerkopplung und den dazugehörigen Kreisbewegungen, der Kreisbewegung des Gelenkpunktes 28 um die Achse des Hochgelenks 22, der Kreisbewegung der Gelenkpunkte 24,25,25' um die Hochachse des Lenkstocklagers 23 und der Kreisbewegung der Gelenkpunkte 26,26' um die dem jeweiligen Laufrad 12,12' zugehörige Hochachse 14,14' des Achszapfens 13,13'.

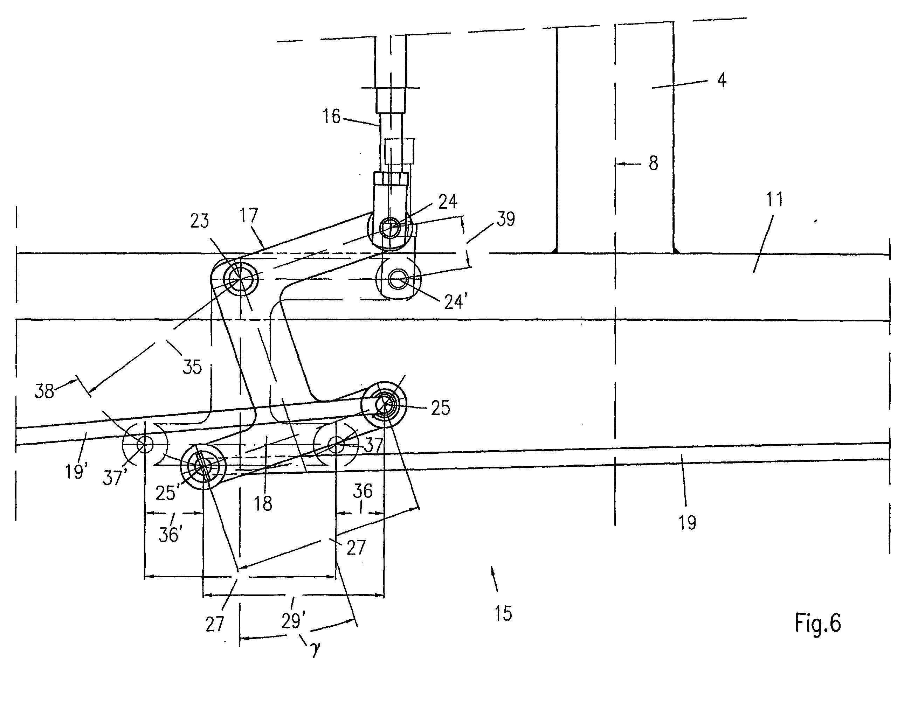

**Fig. 6** zeigt den Lenkstock 18 ausgebildet als Winkelhebel 17 mit der Anbindung an die Zug- und Druckstange 16 und der Spurstangen 19,19' gemäß Fig. 5 in vergrößerter Darstellung. Bedingt dadurch, dass die Schub- und Druckstange 16 den Verschiebeweg 39 als Abstand der Gelenkpunkte 24,24' zurückgelegt hat, erfährt der Winkelhebel 17 eine Verschwenkung um den Schwenkwinkel γ. Die Gelenkpunkte 25,25' bewegen sich auf dem Kreisbogen 38 mit dem Lenkstockradius 35. Bezogen auf die Grundstellung in der Geradeausfahrt haben sich die Gelenkpunkte 25,25' durch das Verschwenken des Winkelhebels 17 um den Schwenkwinkel γ von ihren jeweiligen Ausgangspunkten 37,37' in die dargestellte Position bewegt, wobei der Gelenkpunkt 25 eine Querverschiebung 36 und der Gelenkpunkt 25' eine Querverschiebung 36' erfährt.

Die Größen der Querverschiebungen 36,36' sind abhängig von der Größe des Schwenkwinkels γ, dessen Größe von dem Verschiebeweg 39 abhängt, von dem Lenkstockradius 35 und von dem Gelenkpunktabstand 27, wobei die Größe der Querverschiebungen 36,36' in Abhängigkeit des Schwenkwinkels γ trigonometrischen Funktionen unterliegen. Aufgrund dieser funktionalen Zusammenhänge sind die Querverschiebungen 36,36' unterschiedlich groß, wobei die größere Verschiebung jeweils der Spurstange 19 oder 19' zugeordnet ist, die an dem Lenkhebel 20 oder 20' des Laufrades 12 oder 12' angreift, welches auf dem jeweils inneren Abrollkreis 21 einer Links- oder Rechtskurve abrollt. Dadurch bedingt erfährt das auf dem inneren Abrollkreis 21 laufende Laufrad 12 oder 12' zwangsläufig einen größeren Lenkwinkel δ als das auf dem äußeren Abrollkreis 21' laufende Laufrad 12 oder 12'.

Zusätzlich kann dieser Effekt verstärkt werden, indem die Lenkhebel 20,20' in ihrer Grundstellung einen Anstellwinkel α,α', beispielsweise im Bereich von etwa 10° bis 20°, vorzugsweise etwa 15 °, besitzen.

Weiterhin sind die sich einstellenden Lenkwinkel δ,δ' auch abhängig von den Drehwinkelstellungen der Gelenkpunkte 28,24,25,25',26,26' in Bezug auf ihre jeweiligen Drehachsen.

Die erfindungsgemäße übergreifende Anbindung der Spurstangen 19,19' an den Lenkstock 18, ermöglicht eine besonders günstige Anpassung der Lenkeinschläge der Laufräder 12,12' während der Kurvenfahrten eines Kreiselschwaders 1.

Grundsätzlich kann dabei der Lenkstock 18 eines Winkelhebels 17 auch um eine horizontal ausgerichtete Achse eines Lenkstocklagers 23 verschwenkbar ausgeführt sein, so daß auch in diesem Fall eine übergreifende Überdeckung der Spurstangen 19,19' möglich ist, und somit die Vorteile der Erfindung auch für diese Anwendung nutzbar gemacht werden kann.

## Patentansprüche

1. Heuwerbungsmaschine, insbesondere Kreiselschwader (1) mit zwei quer zur Fahrtrichtung (F) der Maschine nebeneinander angeordneten, sich über Stützräder auf dem Boden abstützenden Kreiselrechen (3,3'), einen an seinen Enden mit den Kreiselrechen (3,3') verbundenen Maschinenquerträger (7), der einen mit einer starren an ein landwirtschaftliches Zugfahrzeug (2) anschließbare Zugdeichsel (6) und zwei jeweils um eine fahrtrichtungsparallele Klappachse (10,10') hochklappbare Ausleger (9,9') aufweist, an denen die Kreiselrechen (3,3') angeordnet sind, mit zwei im Abstand hinter dem Maschinenquerträger (7) parallel und nebeneinander angeordnete, um Hochachsen (14,14') verschwenk- und lenkbare, sich am Boden abstützende Laufräder (12,12'), welche durch eine Lenkvorrichtung (15) in Abhängigkeit von Ausrichtungsänderungen zwischen Zugdeichsel (6) und Zugfahrzeug (2) lenkbar sind, und die Lenkbewegungen der Laufräder (12,12'), welche je mit einem Lenkhebel (20,20') und einer Spurstange (19,19') mit einem Lenkstock (18) gelenkig verbunden sind, durch gesteuerte Schwenkbewegungen des Lenkstocks (18) herbeigeführt werden, **dadurch gekennzeichnet, dass** die dem Lenkstock (18) zugewandten Endbereiche (33,33') beider Spurstangen (19,19') einen ihnen gemeinsamen räumlichen Überdeckungsbereich (29) durchqueren, und die Grenzen des Überdeckungsbereichs (29) quer zur Fahrtrichtung (F) durch zwei parallel zur Mittelebene (8) verlaufende Vertikalebenen (30,30') definiert sind, und die Lage der einen Vertikalebene (30) durch den Gelenkpunkt (25) und die Lage der anderen Vertikalebene (30') durch den Gelenkpunkt (25') definiert ist.

2. Heuwerbungsmaschine nach Anspruch 1, **dadurch gekennzeichnet, dass** der Lenkstock (18) um eine überwiegend vertikale Drehachse eines Lenkstocklagers (23) verschwenkbar ist.

3. Heuwerbungsmaschine nach Anspruch 1, **dadurch gekennzeichnet, dass** der Lenkstock (18) um eine überwiegend horizontale Drehachse eines Lenkstocklagers (23) verschwenkbar ist.

4. Heuwerbungsmaschine nach Anspruch 1 in Verbindung mit einem der Ansprüche 2 oder 3, **dadurch gekennzeichnet, dass** der Lenkstock (18) zwei Gelenkpunkte (25,25') mit einem Gelenkpunktabstand (27) aufweist.

5. Heuwerbungsmaschine nach Anspruch 1 und 4, **dadurch gekennzeichnet dass** die Gelenkpunkte (25,25') in Abstand zur Drehachse des Lenkstocklagers (23) den gleichen Lenkstockradius (35) aufweisen.

6. Heuwerbungsmaschine nach Anspruch 1 in Verbindung mit einem oder mehreren der Ansprüche 2 bis 5, **dadurch gekennzeichnet, dass** die Größe des Überdeckungsbereichs (29) mit zunehmendem Lenkwinkel (δ,δ') abnimmt.

7. Heuwerbungsmaschine nach Anspruch 1 in Verbindung mit einem oder mehreren der Ansprüche 2 bis 6, **dadurch gekennzeichnet, dass** der Betrag des Überdeckungsbereichs (29,29') über den gesamten Lenkbereich, welcher definiert ist durch den größtmöglichen Lenkwinkel (δ,δ'), hervorgerufen durch die Ausrichtungsänderungen des Zugfahrzeugs (2), ≥ 0 mm ist.

8. Heuwerbungsmaschine nach Anspruch 1 in Verbindung mit einem oder mehreren der Ansprüche 2 bis 7, **dadurch gekennzeichnet, dass** in der Grundstellung (Geradeausfahrt) der Laufräder (12,12') die Lenkhebel (20,20') gegenüber der Mittelebene (8) einen Anstellwinkel (α,α') aufweisen.

9. Heuwerbungsmaschine nach Anspruch 1 und 8, **dadurch gekennzeichnet, dass** der Anstellwinkel (α,α') einen Wert innerhalb der Grenzen 10° bis 20° (Altgrad), vorzugsweise 15° aufweist.

## Claims

1. Haymaking machinery, especially rotary windrowers (1) with two circular rakes (3,3') supporting on the ground by support wheels and arranged next to each other across the machine travel direction (F), with one machine traverse (7) each end of which is connected to one circular rake (3,3'), the traverse being equipped with a rigid drawbar (6) connecting to an agricultural tractor (2) and two booms (9,9') each of which is tiltable on a hinged axle (10,10') extending in parallel to the travel direction, the circular rakes (3,3') being fitted to the booms, with two running wheels (12,12') supported on the ground and fitted at a spacing behind the machine traverse (7) in parallel and next to each other as well as swivelling around vertical axes (14,14') and steerable, the running wheels being steered by a steering device (15) in dependence of alignment changes between the drawbar (6) and the tractor (2), the steering movements of the running wheels (12,12'), each of which pivoting on a steering column (18) with a steering lever (20,20') and a track rod (19,19'), being provoked by controlled swivel movements of the steering column (18), **characterised in that** the end sections (33,33') of both track rods (19,19') on the side of the steering column (18) traverse a spatial overlap area (29) they share, and that the boundaries of the overlap area (29) across the travel direction (F) are defined by two vertical levels (30; 30') running in parallel to the centre level (8), and **in that** the position of one of the vertical levels (30) is defined by the pivot point (25) and the position of the other vertical level (30') is defined by the pivot point (25').

2. Haymaking machine according to claim 1, **characterised in that** the steering column (18) swivels around a predominantly vertical rotary axle of a steering column bearing (23).

3. Haymaking machine according to claim 1, **characterised in that** the steering column (18) swivels around a predominantly horizontal rotary axle of a steering column bearing (23).

4. Haymaking machine according to claim 1 in conjunction with one of the claims 2 or 3, **characterised in that** the steering column (18) has two pivot points (25,25') with a pivot point spacing (27).

5. Haymaking machine according to claims 1 and 4, **characterised in that** the pivot points (25,25') show the same steering column radius (35) at the distance to the rotary axle of the steering column bearing (23).

6. Haymaking machine according to claim 1 in conjunction with one or more of claims 2 to 5, **characterised in that** the size of the overlap area (29) decreases as the steering angle (δ,δ') increases.

7. Haymaking machine according to claim 1 in conjunction with one or more of claims 2 to 6, **characterised in that** the size of the overlap area (29,29') throughout the entire steering area, which is defined by the maximum steering angle (δ,δ') caused by alignment changes of the tractor (2), amounts to ≥ 0 mm.

8. Haymaking machine according to claim 1 in conjunction with one or more of claims 2 to 7, **characterised in that** in the basic position (straight travel) of the running wheels (12,12') the steering levers (20,20') show an adjustment angle of (α,α') in relation to the centre level (8).

9. Haymaking machine according to claim 1 and 8, **characterised in that** the adjustment angle (α,α') shows a value within the limits of 10° and 20° degrees (360^{th} part of the circumference of a circle), preferably 15°.

## Revendications

1. Machine de fenaison notamment andaineuse à rotor (1) comportant
- deux roues racleuses (3, 3') placées l'une à côté de l'autre transversalement à la direction de déplacement (F) de la machine et s'appuyant sur le sol par des roues de sustentation, ayant une traverse (7) dont les extrémités sont reliées aux roues racleuses (3, 3'), traverse comportant un timon de traction (6), rigide, susceptible d'être attelé à un tracteur agricole (2) et deux bras (9, 9') qui peuvent se relever chacun autour d'un axe de basculement (10, 10') parallèle à la direction de déplacement, bras portant les roues racleuses (3, 3');
- deux roues de roulement (12, 12') situées à distance derrière la traverse (7), parallèles et juxtaposées, pour pivoter et être guidées autour d'axes verticaux (14, 14'), ces roues s'appuyant sur le sol en étant guidées par un dispositif de guidage (15) en fonction des variations de direction entre le timon de traction (6) et le tracteur (2), et dont les mouvements de guidage des roues de roulement (12, 12') reliées de manière articulée à un levier de direction (20, 20') et à une barre d'accouplement (19, 19') avec un palonnier de direction (18), par des mouvements de pivotement commandés du palonnier (18), sont effectués
**caractérisée en ce que**
les extrémités (33, 33') des deux barres d'accouplement (19, 19'), du côté du palonnier de direction (18), balayent une zone de chevauchement (29) commune dans l'espace, et les limites de la zone de chevauchement (29) transversalement à la direction de déplacement (F) sont définies par deux plans verticaux (30, 30') parallèles au plan médian (8), dont la position d'un plan vertical (30) est définie par le point d'articulation (25) et la position de l'autre plan vertical (30') est définie par le point d'articulation (25').

2. Machine de fenaison selon la revendication 1,
**caractérisée en ce que**
le palonnier de direction (18) peut pivoter autour d'un axe de rotation principalement vertical d'un palier de palonnier de direction (23).

3. Machine de fenaison selon la revendication 1,
**caractérisée en ce que**
le palonnier de direction (18) peut pivoter autour d'un axe de rotation essentiellement horizontal d'un palier de palonnier (23).

4. Machine de fenaison selon la revendication 1 en combinaison avec l'une des revendications 2 ou 3,
**caractérisée en ce que**
le palonnier de direction (18) comporte deux points d'articulation (25, 25') séparés d'une distance (27).

5. Machine de fenaison selon les revendications 1 et 4,
**caractérisée en ce que**
les points d'articulation (25, 25') ont pour le palonnier de direction le même rayon (35) les séparant de l'axe de rotation du palier (23) du palonnier de direction.

6. Machine de fenaison selon la revendication 1 en liaison avec une ou plusieurs des revendications 2 à 5,
**caractérisée en ce que**
l'amplitude de la plage de chevauchement (29) diminue avec l'augmentation de l'angle de direction (δ,δ').

7. Machine de fenaison selon la revendication 1 en liaison avec une ou plusieurs des revendications 2 à 6,
**caractérisée en ce que**
sur toute la plage de braquage définie par l'angle de braquage ou de direction (δ,δ') le plus grand possible produit par les variations d'alignement du véhicule tracteur (2), l'amplitude de la plage de chevauchement (29, 29') est supérieure ou égale à 0 mm.

8. Machine de fenaison selon la revendication 1 en combinaison avec une ou plusieurs des revendications 2 à 7,
**caractérisée en ce que**
dans la position de base (déplacement en ligne droite) des roues de roulement (12, 12'), les leviers de direction (20, 20') font un angle de réglage (α, α') par rapport au plan médian (8).

9. Machine de fenaison selon les revendications 1 et 8,
**caractérisée en ce que**
l'angle de réglage (α, α') présente une valeur située dans les limites comprises entre 10° et 20° (degré angulaire) et notamment 15°.
